# EUROPÄISCHE PATENTANMELDUNG

(11) **EP 1 500 630 A2**
(43) Veröffentlichungstag der Anmeldung: **26.01.2005**
(21) Anmeldenummer: 04016325.5
(22) Anmeldetag: 12.07.2004
(51) Int. Cl.: C01B 17/12, C08K 3/06

(54) **Verfahren zur Herstellung von polymerem Schwefel**

(30) Priorität: 23.07.2003 DE 10333374
(71) Anmelder: Bayer MaterialScience AG, 51368 Leverkusen (DE)
(72) Erfinder: Hagemann, Jörg, Dr., 51061 Köln (DE); Zurlo, Christoph, Dr., 13629 Berlin (DE)

(57) **Zusammenfassung**

Die Erfindung betrifft ein Verfahren zur Herstellung von polymerem Schwefel, gekennzeichnet wenigstens durch die folgenden Schritte: a) Destillation eines Gemisches aus flüssigem Schwefel und einem Lösungsmittel für Cycloocta-Schwefel mit einem Siedepunkt kleiner als 444°C bei Normaldruck, wobei die Sumpftemperatur kleiner ist als die Siedetemperatur des Schwefels und größer ist als die Siedetemperatur des Lösungsmittels und mindestens 120°C beträgt; b) Abschrecken der Schwefelschmelze, welche als Sumpfprodukt der Destillation gemäß a) erhalten wird, mit einer nicht-basischen Flüssigkeit oder einer Mischung nicht-basischer Flüssigkeiten äuf eine Temperatur unterhalb der Schmelztemperatur des Schwefels.

Zusätzlich wird eine Kautschukmischung, die einen nach diesem Verfahren hergestellten Schwefel enthält beansprucht.

## Beschreibung

Die Erfindung betrifft ein Verfahren zur Herstellung von polymerem Schwefel.

Polymerer Schwefel ist auch unter den Bezeichnungen amorpher Schwefel, unlöslicher Schwefel (da in Schwefelkohlenstoff unlöslich), catena-Schwefel oder µ-Schwefel bekannt. Diese Modifikation des Schwefels besteht aus Ketten von bis zu mehreren Tausend Schwefelatomen. Sie ist metastabil, d.h. sie wandelt sich mit der Zeit mit variabler Geschwindigkeit, z.B. in Abhängigkeit von der Temperatur, in eine stabile, nicht-polymere Form um (Reversion). Die unter Normalbedingungen stabile Modifikation des Schwefels wird als Cycloocta-Schwefel, α-Schwefel, löslicher Schwefel (da in Schwefelkohlenstoff leicht löslich) oder rhombischer Schwefel bezeichnet.

Polymerer Schwefel wird hauptsächlich verwendet als Vulkanisationsmittel in der kautschukverarbeitenden Industrie.

Verfahren zur Herstellung von polymerem Schwefel ausgehend von Schwefel sind seit langem bekannt. Beispielsweise offenbaren US 2 419 310 und GB 64 69 16 Verfahren, bei denen Schwefeldampf in Schwefelkohlenstoff abgeschreckt und im Gegenstrom extrahiert wird. Der nach der Extraktion als Feststoff vorliegende unlösliche Schwefel wird abgetrennt und getrocknet. Die Mutterlauge, eine Lösung von löslichem Schwefel in Schwefelkohlenstoff wird destillativ aufgearbeitet, wobei die im Sumpf befindliche Schwefelschmelze zur vollständigen Entfernung von Schwefelkohlenstoff mit Wasserdampf gestrippt wird. Die Nachteile bei diesen Verfahren gemäß US 2 419310 und GB 64 69 16 sind das Reaktorfouling durch Anbackungen von unlöslichem Schwefel und die notwendige Abwasserreinigung, da Schwefelkohlenstoff aufgrund seiner toxikologischen Eigenschaften nicht in die Umwelt abgegeben werden darf. Um bei diesen Verfahren hohe Umsatzraten von über 60 % zu erreichen, muss ferner der Dampf gemäß GB 72 72 06 auf 650-700°C überhitzt werden. Dies führt zu Korrosionsproblemen im Schwefelverdampfer und den Zuleitungen zur Abschreckapparatur.

Eine weitere Möglichkeit, polymeren Schwefel direkt aus Schwefel herzustellen, besteht darin, eine Schwefelschmelze von vorzugsweise über 300°C auf unter 60°C abzuschrecken. Als Abschreckmedium wird hierbei vorzugsweise Wasser eingesetzt (siehe z.B. US 1 875 372, US 2 460 365, US 4 234 552), aber auch die Abkühlung mit Luft ist bekannt. Anschließend wird die erstarrte und gegebenenfalls gemahlene Schmelze vorzugsweise mit Schwefelkohlenstoff extrahiert. Der polymere Schwefel muss dann nach bekannten Methoden abgetrennt und getrocknet und die Mutterlauge aufgearbeitet werden. Nachteilig bei diesen Verfahren sind der notwendige Lösungsmittelwechsel, der eine Zwischentrocknung sowie die bei Abschreckung in Wasser erforderliche Zeit zur Kristallisation des unmittelbar nach der Abschreckung mit Wasser noch plastischen Schwefels (Dauer 2-3 Tage bei Raumtemperatur) bedingt.

Alle beschriebenen Verfahren haben zudem den Nachteil, dass der Cycloocta-Schwefel, den man aus dem Extraktionsmittel zurückgewinnen kann, durch einen zusätzlichen Verfahrensschritt, wie z.B. durch die in GB 64 69 16 beschriebene Strippung mit Wasserdampf, von Restmengen Schwefelkohlenstoff befreit werden muss, bevor er zurückgeführt werden kann.

Aufgabe der vorliegenden Erfindung ist es demnach, ein Verfahren zur Herstellung von polymerem Schwefel bereitzustellen, bei dem die genannten Nachteile vermieden werden. Der Energieverbrauch des Verfahrens soll weitgehend minimiert sein.

Gegenstand der Erfmdung ist ein Verfahren zur Herstellung von polymerem Schwefel, gekennzeichnet wenigstens durch die folgenden Schritte:
a) Destillation eines Gemisches aus flüssigem Schwefel und einem Lösungsmittel für Cycloocta-Schwefel mit einem Siedepunkt kleiner als 444°C bei Normaldruck, wobei die Sumpftemperatur kleiner ist als die Siedetemperatur des Schwefels und größer ist als die Siedetemperatur des Lösungsmittels und mindestens 120°C beträgt.
b) Abschrecken der Schwefelschmelze, welche als Sumpfprodukt der Destillation gemäß a) erhalten wird, mit einer nicht-basischen Flüssigkeit oder einer Mischung nicht-basischer Flüssigkeiten auf eine Temperatur unterhalb der Schmelztemperatur des Schwefels.

Ausgangsprodukt des erfindungsgemäßen Verfahrens ist flüssiger Schwefel. Vorzugsweise hat dieser eine Reinheit von mindestens 99 Gew.-%, besonders bevorzugt von mindestens 99,7 Gew.-%.

Das Lösungsmittel für Cycloocta-Schwefel hat einen Siedepunkt kleiner als 444°C bei Normaldruck und löst bei 20°C wenigstens 1 g/l, bevorzugt wenigstens 10 g/l und besonders bevorzugt wenigstens 100 g/l. In Frage kommen z.B. Schwefelkohlenstoff, Tetrachlorethylen, Toluol und n-Hexan, wobei Schwefelkohlenstoff bevorzugt ist.

Bei der erfindungsgemäßen Destillation gemäß Schritt a) ist die Sumpftemperatur kleiner als die Siedetemperatur des Schwefels und größer als die Siedetemperatur des Lösungsmittels bei dem gewählten Druck. Sie beträgt jedoch mindestens 120°C. Unabhängig von dem gewählten Druck beträgt die Sumpftemperatur bevorzugt mindestens 250°C, insbesondere bevorzugt mindestens 300°C und ganz besonders bevorzugt mindestens 350°C. Die Destillation kann sowohl bei Unterdruck, Normaldruck oder Überdruck durchgeführt werden, wobei Überdruck bevorzugt ist. Der Überdruck beträgt vorzugsweise 0,1 bis 100 bar absolut, besonders bevorzugt 1 bis 30 bar absolut und ganz besonders bevorzugt 3 bis 15 bar absolut. Die Sumpftemperatur und der Druck sind so gewählt, dass die Sumpftemperatur oberhalb des Siedepunktes des Lösungsmittels für Cycloocta-Schwefel und unterhalb des Siedepunktes von Schwefel, mindestens jedoch 120°C beträgt.

Die Destillation kann einstufig oder mehrstufig durchgeführt werden. Eine zweistufige Destillation ist bevorzugt. Dabei wird das Lösungsmittel in der ersten Stufe bis auf einen Restgehalt von z.B. 5 Gew.-% abdestilliert und der Sumpf in einer zweiten Stufe bis auf den bei gegebener Temperatur und Druck möglichen Restgehalt vom Lösungsmittel befreit. Als Destillationsapparate können beispielsweise ein einfacher Blasendestillationsapparat, ein Kettle-Reboiler, Fallfilmerverdampfer oder Wendelrohrverdampfer eingesetzt werden. In einer bevorzugten Ausführungsform des erfindungsgemäßen Verfahrens wird ein Kettle-Reboiler mit aufgesetzter Kolonne verwendet. In einer weiteren bevorzugten Ausführungsform wird eine Kombination aus einer Destillationskolonne mit Blase und einem nachgeschalteten Wendelrohrverdampfer eingesetzt. Als Kolonnen können beispielsweise Füllkörper-, Schlitzboden- oder Glockenbodenkolonnen angewendet werden. Daneben kann die Kolonne auch als Trennwandkolonne ausgeführt sein, wobei eine einfache Anreicherung und Ausschleusung von gegebenenfalls auftretenden mittelsiedenden Verunreinigungen möglich ist.

Die Abschreckung der Schwefelschmelze, welche in Schritt a) des erfindungsgemäßen Verfahrens als Sumpfprodukt erhalten wird, erfolgt dadurch, dass die Schmelze in Kontakt mit einer nicht-basischen Flüssigkeit gebracht wird. Hierzu kann die Schmelze entweder unmittelbar in die nicht-basische Flüssigkeit oder in den Abschreckbehälter oberhalb des Flüssigkeitsspiegel eingeleitet werden. Im letzteren Fall tropft bzw. fließt die Schmelze dann in die Flüssigkeit. Alternativ kann die Schmelze in einer Zweistoffdüse mit der Flüssigkeit in Kontakt gebracht werden.

Zur Vermeidung starker Reversion muss die Abschreckung ausreichend schnell erfolgen. Hierzu wird die Schmelze insbesondere in kleine Tropfen von 0,01 bis 5 mm Durchmesser zerteilt, vorzugsweise von 0,01 bis 0,15 mm oder von 0,5 bis 3,0 mm. Kleinere Tropfen haben den Vorteil, dass sie besser extrahiert werden können als größere Tropfen. Außerdem müssen kleinere Tropfen, sofern sie kleiner als 0,15 mm sind, anschließend nicht gemahlen werden. Kleinere Tropfen haben gegenüber größeren Tropfen jedoch den Nachteil der schwierigeren Abtrennung von der nicht-basischen Flüssigkeit.

Die Tropfenbildung kann beispielsweise oberhalb des Flüssigkeitsspiegels durch Abtropfen, Zertropfen, Zerwellen, Versprühen, Verdüsen oder Prillen erfolgen, unterhalb des Flüssigkeitsspiegels durch Verdüsen oder in einem Strahlrohr. In einer bevorzugten Ausführungsform der Erfindung erfolgt das Einleiten der Schwefelschmelze oberhalb des Flüssigkeitsspiegels. In einer besonders bevorzugten Ausführungsform wird die Schwefelschmelze durch eine oder mehrere Lochblenden in den Abschreckbehälter gedrückt. Dabei sind die Durchmesser der Lochblenden so ausgelegt, dass bei gegebenem Schwefelstrom ein Strahlzerfall durch Zertropfen eintritt.

Unter nicht-basischen Flüssigkeiten sind Flüssigkeiten zu verstehen, die einen pK_{A}-Wert kleiner gleich 14 aufweisen, d.h. die im Falle einer wässrigen Lösung einen pH-Wert kleiner gleich 7 ergeben. Dies können beispielsweise Wasser (ggf. mit Zusätzen wie Wasserstoffperoxid, Persäuren, Gelatine, Leim, Schwefeldioxid, Sulfonaten, Sulfinaten, Alkal- oder Erdalkalichloride oder Mineralsäuren), chlorierte Kohlenwasserstoffe gemäß US 2 667 406 wie z.B. Tetrachlormethan und Tetrachlorethylen, aromatische oder aliphatische Kohlenwasserstoffe wie z.B. Toluol und Hexan und Schwefelkohlenstoff eingesetzt werden, wobei Schwefelkohlenstoff bevorzugt ist

Die Temperatur der Flüssigkeit liegt unterhalb 120°C, vorzugsweise unterhalb 80°C und besonders bevorzugt unterhalb 60°C. Siedender Schwefelkohlenstoff ist zu bevorzugen.

Nach dem Abschrecken der Schwefelschmelze gemäß Schritt b) des erfindungsgemäßen Verfahrens erfolgt eine Extraktion und, falls das Extraktionsmittel nach der Extraktion noch ein gewisse Menge an Cycloocta-Schwefel, enthält eine Wäsche des polymeren Schwefels mit einem Lösungsmittel für Cycloocta-Schwefel. Die Wäsche wird bevorzugt dann durchgeführt, wenn das nach einer möglichen Abtrennung des polymeren Schwefels in demselben verbleibende restliche Extraktionsmittel mehr als 1 Gew.-% Cycloocta-Schwefel bezogen auf den polymeren Schwefel enthalten würde. Die Extraktion und die Wäsche können jeweils im Gleichstrom oder im Gegenstrom durchgeführt werden, wobei die Durchführung im Gegenstrom bevorzugt ist. Die Extraktion kann kontinuierlich in einer Mehrkörper-Extraktionsanlage oder einem Extraktor bzw. batchweise in einem Rührkessel oder einem Extraktor durchgeführt werden. Als Extraktoren können beispielsweise Diffuseure, stehende Extraktoren mit Rührwerk, rotierende Extraktoren, Extraktionsfilterpressen, Drehscheiben- oder Rührkolonnen, Becherwerks-, Schnecken-, Zellen- oder Karussel-Zellenextraktoren eingesetzt werden.

Die Wäsche kann beispielsweise so durchgeführt werden, dass die im Extraktionsschritt erhaltene Suspension durch kontinuierlichen bzw. batchweisen Lösungsmittelaustausch in einem Extraktor oder Rührkessel bzw. einer Extraktorkaskade oder Rührkesselkaskade gewaschen wird, wobei das Lösungsmittel im Falle einer Kaskade vorzugsweise im Gegenstrom geführt wird. Eine weitere Möglichkeit zur Wäsche besteht darin, den extrahierten polymeren Schwefel abzutrennen und anschließend als Filterkuchen oder durch ggf. mehrfaches Aufschlämmen und erneutes Abtrennen zu waschen.

In einer bevorzugten Ausführungsform der Erfindung erfolgen Extraktion und Wäsche in einem Gegenstromextraktor, der so geführt ist, dass das Extraktionsmittel im Suspensionsauslass praktisch frei von löslichem Schwefel ist. Als Gegenstromextraktor kann beispielsweise eine Rührkolonne nach dem Mixer-Settler-Prinzip eingesetzt werden.

Für die Extraktion und Wäsche wird bevorzugt als Lösungsmittel für Cycloocta-Schwefel Schwefelkohlenstoff eingesetzt.

In einer besonders bevorzugten Ausführungsform der Erfindung erfolgen Abschreckung und Extraktion in einem Gegenstromextraktor, in den oben die Schwefelschmelze zugeführt wird. Die Abschreckung im Gegenstromextraktor erfolgt wie oben beschrieben: die Schmelze kann in den Gegenstromextraktor entweder unmittelbar in die nicht-basische Flüssigkeit oder oberhalb des Flüssigkeitsspiegels eingeleitet werden. Die Schmelze kann auch mit der nicht-basischen Flüssigkeit in einer Zweistoffdüse vermischt werden. Die Schmelze wird z.B. in Tropfen zerteilt. Die Tropfenbildung kann beispielsweise oberhalb des Flüssigkeitsspiegels durch Abtropfen, Zertropfen, Zerwellen, Versprühen, Verdüsen oder Prillen erfolgen, unterhalb des Flüssigkeitsspiegels durch Verdüsen oder in einem Strahlrohr.

Die Abtrennung des polymeren Schwefels kann sowohl batchweise als auch kontinuierlich durchgeführt werden. Hierzu können beispielsweise Filter (z.B. Filternutschen, Filterpressen, Filtertrockner, Dreh-, Rotationsdreh- oder Bandfilter), Siebe (z.B. Bogen-, Trommel- oder Rüttelsiebe) oder Zentrifugen (z.B. Schäl-, Rohr-, Schneckenaustrags-, Teller-, Pendel-, Sieb-, Siebschneckenoder Schubzentrifugen) eingesetzt werden. Vorzugsweise kommen im Falle von Partikeln kleiner 0,15 mm kontinuierlich arbeitende Schneckenaustrags- oder Siebschneckenzentrifugen, im Falle von Partikeln größer 0,5 mm Siebe zum Einsatz.

In einer bevorzugten Ausführungsform des erfindungsgemäßen Verfahrens wird nach der Extraktion das Extraktionsmittel, d.h. das mit Cycloocta-Schwefel beladene Lösungsmittel, der Destillation gemäß Schritt a) zugeführt. Bevorzugt wird außerdem eine der abgetrennten Menge an polymerem Schwefel entsprechende Menge an Schwefel der Destillation zugeführt.

Die Trocknung des lösungsmittelfeuchten polymeren Schwefels erfolgt batchweise oder kontinuierlich bei Normaldruck oder im Vakuum. Beispiele für geeignete Trockner sind Band-, Trommel-, Schaufel-, Taumel-, Etagen-, Teller- oder Stromtrockner. Bevorzugt erfolgt die Trocknung unter Vakuum und besonders bevorzugt kontinuierlich unter Vakuum, im Falle von Partikeln kleiner 0,15 mm in einem Schaufeltrockner mit wandgängigen Schaufeln.

In einer bevorzugten Ausführungsform der Erfindung wird der polymere Schwefel einem Zerkleinerungsschritt unterworfen, sofern die Teilchengröße der im Abschreckungsprozess erzeugten Schwefel-Partikel (Primärteilchen bzw. Aggregate oder Agglomerate der Primärteilchen) 500 µm, vorzugsweise 300 µm, besonders bevorzugt 150 µm, übersteigt. Die Zerkleinerung kann mit den im Lösungsmittel suspendierten, den lösungsmittelfeuchten oder den trockenen Partikeln erfolgen. Hierfür können beispielsweise Nassmühlen (Homogenisierer), Trommel-, Schwing-, Strahl-, Prall-, Hammer-, Zahnscheiben- oder Fließbettstrahlmühlen verwendet werden, wobei die Mühlen vorzugsweise mit einer Einrichtung zum Klassieren (z.B. Siebe oder Sichter) versehen sind. Bei der Mahlung sollte das Mahlgut zur Vermeidung von Reversion eine Temperatur von 70°C, vorzugsweise 60°C, besonders bevorzugt 50°C, nicht übersteigen. Hierzu kann die Mühle oder ggf. eingesetztes Kreisgas gekühlt werden.

In einer besonders bevorzugten Ausführungsform erfolgt der Zerkleinerungsschritt nach der Extraktion/Wäsche und vor der mechanischen Abtrennung mit einer Nassmühle (Homogenisierer) oder nach der Trocknung mit einer Prall- oder Fließbettgegenstrahlmühle mit gekühltem Kreisgas.

Der polymere Schwefel wird in der kautschukverarbeitenden Industrie sowohl in reiner als auch in beölter Form eingesetzt. Die Beölung des polymeren Schwefels kann auf bekannte Weise in Mischaggregaten wie z.B. einem Planetenrührer, Schaufelkneter, Kreisel-, Taumel-, Schneckenoder Nautamischer erfolgen. Kontinuierlich arbeitende Mischaggregate sind bevorzugt. Als Öle kommen parafinische, naphthenische oder aromatische Öle zum Einsatz, wobei parafinische und naphthenische bevorzugt sind.

Einzelne Verfahrensschritte zur Isolierung (mechanische Abtrennung und Trocknung) und Konfektionierung (Zerkleinern und Beölen) können ggf. kombiniert und in einem Apparat nacheinander oder gleichzeitig durchgeführt werden. Beispiele hierfür sind Filtertrockner, mit denen der unlösliche Schwefel abgetrennt und getrocknet werden kann, und Mischtrockner, mit denen der abgetrennte Schwefel mit Öl versetzt und getrocknet werden kann.

Der polymere Schwefel wird zur Verringerung der Reversion, d.h. zur Verbesserung der Lagerstabilität, vorzugsweise mit Stabilisatoren versetzt. Die Zugabe des bzw. der Stabilisatoren kann zur Suspension, zum lösungsmittelfeuchten oder zum trockenen Produkt erfolgen. Im Falle der Zugabe zu dem lösungsmittelfeuchten bzw. trockenen Produkt können die oben erwähnten Mischaggregate eingesetzt werden. Als Stabilisatoren kommen beispielsweise ungesättigte Kohlenwasserstoffe (z.B. α-Methylstyrol, Myricin, α-Pinen) oder Halogenverbindungen (z.B. Thionylchlorid, Dischwefeldichlorid, Thionylbromid, Iod) zum Einsatz, wobei α-Methylstyrol bevorzugt ist. Es werden vorzugsweise 0,02 - 2 Gew.-% und besonders bevorzugt 0,1-1 Gew.-% eines Stabilisators eingesetzt.

Die Vorteile des erfindungsgemäßen Verfahrens bestehen darin, dass der Cycloocyta-Schwefel, den man aus dem Extraktionsmittel zurückgewinnt nicht vollständig vom Extraktionsmittel befreit wird und durch die Abschreckung einer Schwefelschmelze Korrosionsprobleme und Reaktorfouling reduziert werden. Weiterhin wird durch den bevorzugten Einsatz von Schwefelkohlenstoff für die Abschreckung und die Extraktion ein aufwendiger Lösungsmittelwechsel vermieden.

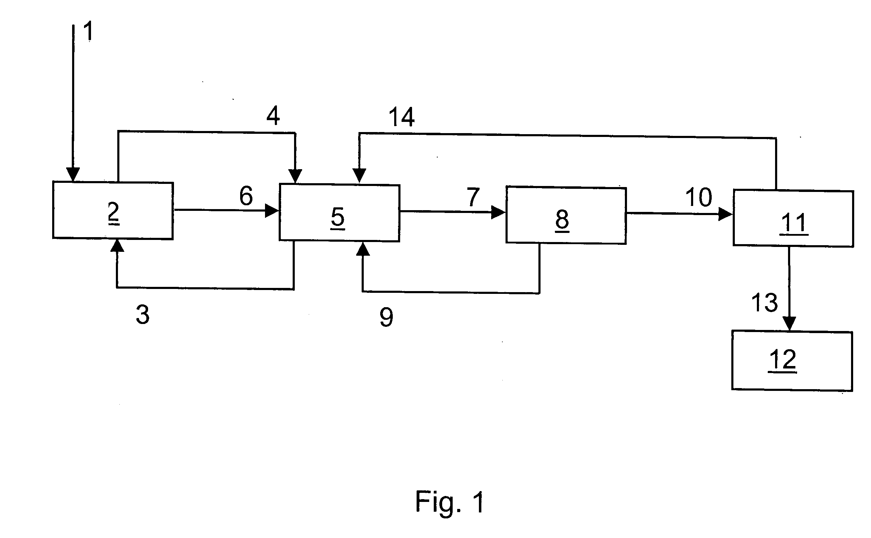

Nachfolgend wird die Erfindung anhand der beigefügten Zeichnung näher erläutert. Figur 1 zeigt ein Schema des erfindungsgemäßen Verfahrens, welches in Beispiel 1 näher beschrieben wird.

### Beispiele

### Beispiel 1:

Ein Strom 1 von 170 kg/h flüssigem Schwefel mit einer Temperatur von 140°C sowie 1500 kg/h einer 21 gew.-%igen Lösung 3 von Schwefel in Schwefelkohlenstoff wurden in eine zweistufige Destillationseinheit 2, die aus einer Glockenbodenkolonne und einem Fallfilmverdampfer bestand und bei 7,5 bar absolut betrieben wurde, eingespeist. Über Kopf gingen 1175 kg/h reiner Schwefelkohlenstoff 4 über, die in den Extraktionsteil eines Behälters 5, der als Abschreck/Extraktionseinheit diente, gepumpt wurden. Aus dem Sumpf der Destillationseinheit 2 wurden 495 kg/h Schwefelschmelze 6 mit einer Temperatur von 380°C entnommen und in den als Abschreck/Extraktionseinheit dienenden Behälter 5 überführt. Der Abschreck/Extraktionsbehälter 5 war zum Abschrecken der Schwefelschmelze teilweise mit Schwefelkohlenstoff als nicht-basischer Flüssigkeit gefüllt. Die Schwefelschmelze 6 wurde über eine Lochplatte mit 100 Löchern von 2,5 mm Durchmesser im oberen Bereich des Abschreck/Extraktionsbehälters 5 von oben eingeleitet. Der Abstand von der Unterseite der Lochplatte zur Oberfläche der Flüssigkeit (Schwefelkohlenstoff) betrug 1,25 m. Die nach dem Erstarren der Schwefeltropfen erhaltenen Partikel sanken in dem im Gegenstrom betriebenen Extraktionsteil (Rührkolonne mit 20 Abschnitten) des Behälters 5 ab. Am Auslauf des Extraktionsteils des Behälters 5 wurden 950 kg/h einer Suspension 7 von polymerem Schwefel in Schwefelkohlenstoff bei einer Temperatur von 40°C abgenommen und in einen Dekanter 8 überführt. 605 kg/h des im Dekanter 8 abgetrennten Schwefelkohlenstoffs 9 wurden in den Extraktionsteil des Abschreck/Extraktionsbehälters 5 gepumpt. 345 kg/h des feuchten polymeren Schwefels 10 mit einer Temperatur von 40°C wurden in einen Vakuum-Tellertrockner 11 überführt und bei 60 mbar und 40°C getrocknet. 175 kg/h Schwefelkohlenstoff 14 wurden in den Abschreck/Extraktionsbehälter 5 rückgeführt. Man erhält so 170 kg/h polymeren Schwefel 13, der zuletzt einer Konfektionierung (Mahlung, Stabilisierung, Ölung und Abpackung) 12 unterworfen wurde, d.h. der polymere Schwefel 13 wurde auf bekannte Weise gemahlen, mit naphthenischem Mineralöl und α-Methylstyrol vermischt und schließlich abgepackt.

### Beispiel 2:

Durch eine Lochblende von 0,7 mm Durchmesser wurde eine Schwefelschmelze von 400°C in einer Menge von 1 l/h von oben in einen mit Schwefelkolenstoff gefüllten Rührbehalter gepumpt. Der Abstand von Lochblende und Flüssigkeitsoberfläche betrug 50 cm. Die entstehende Suspension wurde über eine Drucknutsche abgetrennt.

Es wurden flache ovale Pastillen mit einem Durchmesser von 0,5-4 mm erhalten.

Der beschriebene Versuch wurde mit verschiedenen Blendendurchmessern, Schwefelströmen und Schwefeltemperaturen wiederholt. Die nachfolgende Tabelle fasst die Versuche zusammen.

| Beispiel | Blendendurchmesser [mm] | Schwefelstrom [1/h] | Temperatur [°C] |
|---|---|---|---|
| 2-1 | 0,7 | 1 | 400 |
| 2-2 | 0,7 | 2 | 350 |
| 2-3 | 0,7 | 4 | 400 |
| 2-4 | 1,0 | 1 | 420 |
| 2-5 | 1,0 | 2 | 380 |
| 2-6 | 1,0 | 4 | 400 |
| 2-7 | 2,0 | 2 | 380 |
| 2-8 | 2,0 | 4 | 400 |
| 2-9 | 3,0 | 1 | 320 |
| 2-10 | 3,0 | 3 | 380 |
| 2-11 | 3,0 | 6 | 420 |
| 2-12 | 4,0 | 1 | 360 |
| 2-13 | 4,0 | 4 | 400 |

In allen Fällen wurden flache, ovale Pastillen mit einem Durchmesser von 0,5-4 mm und vergleichbarer Größenverteilung erhalten.

Das Beispiel belegt, dass das Zertropfen zur Erzeugung von Partikeln aus einer Schwefelschmelze geeignet ist und zudem einen sehr großen Lastbereich ermöglicht.

## Patentansprüche

1. Verfahren zur Herstellung von polymerem Schwefel, gekennzeichnet wenigstens durch die folgenden Schritte:
a) Destillation eines Gemisches aus flüssigem Schwefel und einem Lösungsmittel für Cycloocta-Schwefel mit einem Siedepunkt kleiner als 444°C bei Normaldruck, wobei die Sumpftemperatur kleiner ist als die Siedetemperatur des Schwefels und größer ist als die Siedetemperatur des Lösungsmittels und mindestens 120°C beträgt.
b) Abschrecken der Schwefelschmelze, welche als Sumpfprodukt der Destillation gemäß a) erhalten wird, mit einer nicht-basischen Flüssigkeit oder einer Mischung nicht-basischer Flüssigkeiten auf eine Temperatur unterhalb der Schmelztemperatur des Schwefels.

2. Verfahren nach Anspruch 1, **dadurch gekennzeichnet, dass** als Lösungsmittel für Cycloocta-Schwefel Schwefelkohlenstoff verwendet wird.

3. Verfahren nach einem der Ansprüche 1 oder 2, **dadurch gekennzeichnet, dass** als nicht-basische Flüssigkeit Schwefelkohlenstoff verwendet wird.

4. Verfahren nach einem der Ansprüche 1-3, **dadurch gekennzeichnet, dass** die Destillation gemäß a) bei einem Druck von 0,1 bis 100 bar absolut, bevorzugt von 1 bis 30 bar absolut, besonders bevorzugt von 3 bis 15 bar absolut, durchgeführt wird.

5. Verfahren nach einem der Ansprüche 1-4, **dadurch gekennzeichnet, dass** die Destillation gemäß a) bei einer Sumpftemperatur von mindestens 250°C, bevorzugt 300°C, besonders bevorzugt 350°C, erfolgt.

6. Verfahren nach einem der Ansprüche 1-5, **dadurch gekennzeichnet, dass** zum Abschrecken der Schwefelschmelze mit einer nicht-basischen Flüssigkeit gemäß b) die Schwefelschmelze in Tropfen von 0,01 bis 5 mm Durchmesser zerteilt wird.

7. Verfahren nach einem der Ansprüche 1-6, **dadurch gekennzeichnet, dass** nach dem Abschrecken gemäß b) c) eine Extraktion des Schwefels mit einem Lösungsmittel für Cycloocta-Schwefel, vorzugsweise mit Schwefelkohlenstoff, erfolgt.

8. Verfahren nach Anspruch 7, **dadurch gekennzeichnet, dass** nach der Extraktion gemäß c) das mit Cycloocta-Schwefel beladene Lösungsmittel der Destillation gemäß a) zugeführt wird.

9. Verfahren nach einem der Ansprüche 1 bis 8, **dadurch gekennzeichnet, dass** der polymere Schwefel mit wenigstens einem Stabilisator, vorzugsweise einem ungesättigten Kohlenwasserstoff oder einer Halogenverbindung, besonders bevorzugt α-Methylstyrol, Thionylchlorid oder Dischwefeldichlorid, versetzt wird.

10. Verfahren nach einem der Ansprüche 1 bis 9, **dadurch gekennzeichnet, dass** der polymere Schwefel mit wenigstens einem Öl, vorzugsweise einem paraffinischen oder naphthenischen Mineralöl, versetzt wird.

11. Kautschukmischung, enthaltend polymeren Schwefel, welcher nach einem Verfahren gemäß einem der Ansprüche 1 bis 10 hergestellt wird.
